# EUROPEAN PATENT SPECIFICATION

(11) **EP 0 409 099 B1**
(45) Date of publication and mention of the grant of the patent: **20.11.1996**
(21) Application number: 90113429.6
(22) Date of filing: 13.07.1990
(51) Int. Cl.: H01B 1/22, H01B 1/16, C09D 5/24, H05B 3/12

(54) **Conductive heating unit**
Leitfähige Heizungseinheit
Unité chauffante conductrice

(30) Priority: 17.07.1989 JP 182419/89
(43) Date of publication of application: 23.01.1991
(73) Proprietor: Ota, Takashi, Takarazuka Hyogo 665 (JP); FUJII KINZOKU KAKO CO., LTD., Osaka 553 (JP)
(72) Inventor: Ota, Takashi, Takarazuka, Hyogo 665 (JP)
(74) Representative: von Kreisler, Alek, Dipl.-Chem.

(56) References cited:
- EP-A- 0 162 979
- WO-A-87/05385
- FILE SUPPLIER JAPS, Patent Office of Japan; & JP-A-62 153 146 (ASAOKA) 08-07-1987
- DATABASE DERWENT WORLD PATENT INDEX, accession no. 74-33176V [18], Derwent Publications Ltd, London, GB; & JP-A-48 101 455 (TEIJIN) 20-12-1973
- FILE SUPPLIER JAPS, Patent Office of Japan; & JP-A-61 152 775 (TOSHIBA) 11-07-1986
- FILE SUPPLIER JAPS, Patent Office of Japan; & JP-A-60 096 548 (NIPPON KAGAKU) 30-05-1985

## Description

The present invention relates to a conductive heating unit operable at low voltages.

Various conductive heating units each of which comprises a conductive sheet or coating film containing a fine conductive powder and a binder have previously been known, and a fine powder of carbon black, graphite, a metal or a metal oxide has been used as the fine conductive powder (Japanese Patent Unexamined Publication Nos. 60-59131/1985 and 54-149758/1979).

Prior-art conductive heating units using carbon black or graphite as the fine conductive powder can be used at commercial voltages of 100 to 200 V, but can not be used at low voltages of 1.2 to 24 V which are applied, for example, when batteries are used as power sources, because the resistance of carbon black or graphite is too high to develop heat. For the purpose of reducing the resistance (Ω) of a conductive heating unit to several tenths to several hundredths that of the heating unit containing carbon black or graphite, attention can be given to metal powders.

However, the metal powders incorporated in coating solutions, even if they are finely pulverized, precipitate downward during storage as conductive coatings or during solidifying procedure of liquid coating films because of their high specific gravity. Consequently, the production of the-heating units by using the metal powders results in the difficulty of obtaining uniform exothermic surfaces. One possible solution for prevention of this precipitation is to mix the coating with a thickener or a suspending agent. However, such prior-art thickeners or suspending agents can not effectively disperse the metal powders, and hence only exothermic conductive coatings partially different in resistance are obtained. For this reason, such coatings are unsuitable for surface heaters which are required to have uniform temperature distribution.

JP 600 965 48 A discloses hollow glass particles having an apparent specific gravity of > 1, an average particle diameter of preferably < 100 µm, i.e. so-called glass balloons which are sensitized by contacting with an aqueous solution of a soluble stannous compound and then brought into contact with an aqueous solution of a soluble Pd salt. The particles are dispersed in an aqueous medium and an electroless plating liquid is added to the dispersion at a controlled rate of addition to effect a rapid plating reaction.

WO 87/05385 discloses a target, in particular an aim, including a base material and an electrically conductive and heatable coating which can be connected to a source of current. The electrically conductive and heatable coating is composed of a lacquer containing a conductive material.

EP 0 162 979 A1 refers to electrically conductive microparticles being characterized by high conductivity and low density comprising of electrically non-conductive microballoons having an electrically conductive coating of metal.

JP 481 014 55 A discloses spherical hollow alumina silicate particles being sensitized, activated and non-electrolytically plated with Cu.

JP 611 527 75 A refers to an electrically conductive coating compound being useful for electronic device boxes and having improved adhesivity to plastics and sufficient shielding effect on strong electromagnetic waves, obtained by incorporating a coating compound resin with electrically conductive particles having approximately the same specific gravity as that of the resin.

JP 621 431 46 A refers to the production of silas balloons having metal coat. Silas balloons consisting essentially of silica and having very light weight are first dipped in water for a given time to separate and recover only completely expanded and hollow fine spherical particles floating on the surface. The separated and recovered completely hollow silas balloons are then put in a bag made of fibers hardly sticking metal plating, for example nylon net. The bag is then sufficiently dipped in a metal plating solution to uniformly plate the surfaces of the silas balloons with metals.

At present, therefore, there are utilized no surface heaters operable at low voltages which are applied, for example, when batteries are used as power sources.

It is therefore a primary object of the present invention to provide a conductive heating unit operable at low voltages.

Other objects of this invention will be apparent from the following description.

The present inventors discovered that fine hollow resin or glass particles plated with a metal can be uniformly dispersed in an exothermic conductive coating film, thereby obtaining a conductive heating unit operable at low voltages.

The present invention provides a conductive heating unit having a solid or solid surface coated with a film of 0.1 to 3.0 mm thickness on a surface and having terminals for applying a voltage from 0.5 to 200 V, wherein said film is obtained by applying a coating or paste to the surface of the solid or by impregnating the solid in a coating or paste, wherein the coating or paste comprises fine conductive particle powder(s) and a synthetic resin binder, wherein the fine conductive particle powder(s) comprise(s) fine hollow spherical particles of glass or a heat-resistant resin, said particles being plated with a metal in a thickness of 0.1 to 0.3 µm and said powder having a bulk density of 0.2 to below 0.9 g/cm³.
Fig. 1 is a graph showing the resistance relative to the ratio of the resin to the conductive powder; and
Fig. 2 is a graph showing the relationship between the exothermic temperature of the present invention at 6 V and the electric resistance.

The fine hollow spherical glass or resin particles used in the present invention include, for example, glass such as Scotch Light (registered trade mark) Glass Bubble (S60/10000 and so on, Sumitomo 3M) and resins such as polymethyl methacrylate (PMMA) and polystyrene.

As the glass, soda-lime borosilicate glass (SiO₂ 54, Al₂O₃ 14, BeO₃ 8.3, FeO₃ 0.2, Na₂O 0.5, MgO 1, CaO 22) is used, and as heat-resistant resins, polyamide resins are used.

The size of the fine hollow spherical glass or resin particles is suitably 4 to 350 µm, preferable 10 to 200 µm. The particles having a size of less than 4 µm increase the resistance (Ω) of the surface heater too high, and the particles having a size of more than 350 µm are difficult to disperse in the coating. These particles are therefore unfavorable. The thickness of the glass or resin particles can be 0.5 to 2 µm.

The metal plating on the fine hollow spherical glass or resin particles is performed by electroless plating, a combination of electroless plating and electrode plating or the like. In the case of the metal plating, Pt, Au, Ag and Ni are preferably used as the metals. Other metals such as Cu and Sn are unsuitable, because they are oxidized in use of the heating unit to increase the electric resistance.

Of the metals, Ag can satisfy both of cost and stability in quality.

The thickness of metallic deposits can be selected, taking cost and dispersibility into account. The thickness is 0.1 to 0.3 µm. The deposits having a thickness of less than 0.03 µm increase the resistance (Ω) of the surface heater too high, and the deposits having a thickness of more than 0.8 µm make it difficult to disperse the particles in the coating, which results in the rise of cost.

The bulk density of the fine hollow spherical metal-plated glass or resin particle powders is similar to that of the synthetic resin binders, namely 0.2 to less than 0.9 g/cm³. If the bulk density is less than 0.2 g/cm³, segregation takes place to provide insufficient strength. On the other hand, if the bulk density is 0.9 g/cm³ or more, precipitation occurs to result in deterioration in dispersibility.

As the synthetic resin binders for the conductive materials, there are used thermoplastic, thermosetting and electron beam curable resins, which can be suitably selected depending on the application field of the heating unit. The thermoplastic resins have a soften,ing point of at least 15°C and a mean molecular weight of thousands to hundreds of thousands. The thermosetting resins or reactive resins have a molecular weight of not more than 200,000 in the state of coating solutions. The resins are heated after their coating and drying to infinitely increase their molecular weight by reactions such as condensation and addition. There can also be used the radiation curable resins in which groups cross-linkable or polymerizable to dryness by radiation exposure are contained or introduced in the molecules of thermosetting resins. Such groups include acrylic double bond groups such as a radical-polymerizable unsaturated double bond group contained in acrylic acid, methacrylic acid or their ester compounds, allylic double bond groups such as a group contained in diallyl phthalate, and unsaturated bond groups such as a group contained in maleic acid or its derivatives.

Examples of such synthetic resins include polyimide resins, polyamide resins, polyphenylene oxide resins, silicone resins, polytitanocarbosilane resins, phenol resins, epoxy resins, polyparabanic acid resins, polyurethane resins, polyester resins, polyetheretherketone resins, polyphenylene sulfide resins, polyflon resins, polyolefin resins and polyvinyl chloride resins. There can be selected a resin having a softening temperature or a decomposition temperature depending on the temperature desired for the coated film.

The amount ratio of the synthetic resin binder to the fine hollow spherical conductive particle powder is variously selected depending on the desired heating temperature, the area of the heating surface, the kind of the fine conductive particle powder and the synthetic resin, combinations thereof and the like. However, the synthetic resin is generally used in a ratio of 25 to 360 parts by weight, preferable 30 to 200 parts by weight, to 100 parts by weight of the fine conductive particle powder.

When the ratio of the synthetic resin is less than 25 parts by weight, the electric resistance value decreases and the temperature of the heating unit can be elevated (therefore, applicable to the heating unit having a large heating surface). However, the strength of the coated film is insufficient, and the temperature coefficient of the electric resistance is reduced, thereby being liable to produce temperature unevenness. On the other hand, when the ratio of the synthetic resin is more than 360 parts by weight, the electric current necessary for heating can not be obtained (because of the excessive resistance value), which results in unsuitableness for the practical use.

The applied voltage which can be used in the present invention is 0.5 to 200 V, and can be adjusted by varying the ratio of the synthetic resin binder to the fine conductive powder and the thickness of the film. For example, when the low voltage is applied from a battery, the amount ratio of the fine conductive powder is increased. According to the present invention, the surface temperature of the heating unit is stably heated at desired temperatures up to at most about 450°C (at an environmental temperature of -30 to 40°C) for a long time by combinations of the compounding of the coating, the thickness of the coated film, the applied voltage and the like.

The coatings mainly comprising the fine conductive particle powders and the synthetic resins are applied by various coating methods such as brushing, roller coating, spray coating, electrostatic coating, electrodeposition coating and power coating, or by immersing methods. To the coatings, other additives or auxiliary agents may be added. Examples of the additives or the auxiliary agents include diluting agents, suspending agents, dispersants, antioxidants, other pigments and other necessary additives.

As the diluting agents, there are employed solvents used for coatings, such as aliphatic hydrocarbons, aromatic petroleum naphtha, aromatic hydrocarbons (for example, toluene and xylene), alcohols (for example, isopropyl alcohol, butanol and ethylhexyl alcohol), ether alcohols (for example, ethyl cellosolve, butyl cellosolve and ethylene glycol monoether), ethers (for example, butyl ether), acetates, acid anhydrides, ether esters (for example, ethyl cellosolve acetate), ketones (for example, methyl ethyl ketone and methyl isobutyl ketone), N-methyl-2-pyrrolidone, dimethylacetamide and tetrahydrofuran. The preferred solvent is suitable selected depending on the synthetic resin as the binder. The diluting solvent is used in an amount of 400 parts by weight or less per 100 parts by weight of the resin.

The suspending agents used as required include methyl cellulose, calcium carbonate and fine powders of modified bentonite. As the dispersants, various surface-active agents are used. Such surface-active agents include anionic surface-active agents (such as fatty acid salts and liquid fatty oil sulfate salts), cationic surface-active agents (such as aliphatic amine salts and quaternary ammonium salts), amphoteric surface-active agents and nonionic surface-active agents.

In order to achieve solidification to dryness or curing of the coatings or pastes with ease for a short time, curing agents can be added. The curing agent can be selected depending on the resin used, and there are used known curing agents such as aliphatic or aromatic amines, polyisocyanates, polyamides, amines, thiourea and acid anhydrides.

In addition, stabilizers, plasticizers, antioxidants or the like are suitably used.

The solids formed of substrates such as plastic materials, ceramic materials, woody materials, fibers, paper and metal materials coated with electric insulators in desired shapes, or the surfaces thereof are coated with or immersed in the exothermic conductive coatings of the present invention to produce the heating units.

For example, the substrate formed of the metal material coated with the electric insulator, the ceramic material, the plastic material, woody material or a combination thereof, to which at least two metal terminals are securely attached, is coated with the coating of the present invention to a thickness of about 0.2 to 3.5 mm (the thickness of the coated film after curing is 0.1 to 3 mm).

The shape of the substrate described above is not particularly limited, which may be a plane surface or a curved surface. The heating units can be formed of linear, rod-like, cylindrical, plane or other thre-dimensionally curved substrates.

Although it is desirable to coat the substrate surfaces with the ceramic materials, the woody materials are sometimes usable if a desired temperature is 150°C or lower. There are also usable combined articles such as a composite comprising the woody material, the plastic material or the metal material and the ceramic material applied thereon.

When the solid surface to be coated is large and the brushing, the roller coating or the spray coating is adopted, the coating is increased in fluidity to improve the workability. In this case, a solvent for dilution is preferably incorporated in an amount of not more than 400 parts by weight per 100 parts by weight of the conductive powder. If more solvent is incorporated, the coating is too much fluidized and it is difficult to obtain a prescribed thickness of the coated film. The use of excessive solvent is therefore unsuitable for obtaining a desired surface temperature of the coated film.

The coated film is cured, solidified to dryness or cured by electron beams (radiation) at a temperature ranging from about 70 to 350°C.

When the solidification to dryness or the curing is conducted at a temperature ranging from about 70 to 350°C for an ample time, a smooth film having a prescribed thickness can be obtained. Higher temperatures are undesirable, because foaming, flowing, cracking and deterioration in quality are liable to take place. Temperature lower than 70°C are also undesirable, because it requires a lot of time.

When the coating is applied to a thickness of about 0.2 to 3.5 mm, followed by reaction at a temperature of not more than 350°C to cure the coating, the coated film solidified to dryness and having a thickness of about 0.1 to 3.0 mm is obtained. This electric resistance heating coated film generates high temperature as well as low temperature. It is preferred that the coating is applied to a thickness of about 0.1 to 3.0 mm. If the thickness is less than 0.1 mm, the electric. resistance increases too high, the wattage per unit area decreases too low, and further the film strength is insufficient. If the thickness is more than 3.0 mm, the segregation is liable to occur by precipitation and separation of the particles, and the uniform coated film is difficult to be obtained. The electric resistance between the metal terminals on this coated film is 0.1 to 300Ω/▭ at ordinary temperature (wherein Ω/▭ represents electric resistance value per square area).

If there is a fear of leak, the exothermic coated film is covered with an electric insulating film thinly so far as the strength is maintained. Too thick film results in disturbance of heat transfer.

The heating units are similarly produced by treating the fibers or the paper with the coatings or pastes of the present invention containing the fine hollow spherical metal-plated particles and the synthetic resins.

Also, the heating units having excellent surface properties can be obtained by the use of the electron beam (radiation) curable resins.

According to the exothermic conductive coatings of the present invention, the temperature of the heating units is adjustable to a desired temperature by the selection of the kind of the fine hollow spherical metal-plated particles and the synthetic resin, the compounding ratio, the thickness of the coated film and combination thereof, and further by the selection of the heating area or the applied voltage.

The exothermic conductive coatings of the present invention have temperature self-controlling function. In particular, the thickness of the coated films is unnecessary to be precisely made uniform, and the coated films can be manually formed on the solid surfaces of a desired shape. Further, the heating units can be produced by immersing the impregnatable solid materials (such as the fibers and the paper) of a desired shape in the coatings. The heating units of the present invention can therefore be widely utilized in various fields such as an interior wall application, flooring, roofing, a furnace inner surface use, pipe inner and outer surface applications, carpets, blankets, simplified heaters, warmers, antifreezers, signal covers and pots. In particular, the heating units are excellent as heaters for room heating and hot insulation and heating parts. According to the present invention, there can be obtained the heating units having the temperature self-controlling function, arbitrarily adjustable to desired temperatures up to about 450°C and further having the uniform temperature distribution over a large heating surface to a small heating surface in various shapes and surfaces (including an uneven surface).

The present invention will be described in detail with reference to the following Examples. It is understood of course that these are not intended to limit the scope of the invention. In the following Examples, all parts are by weight.

### Example 1

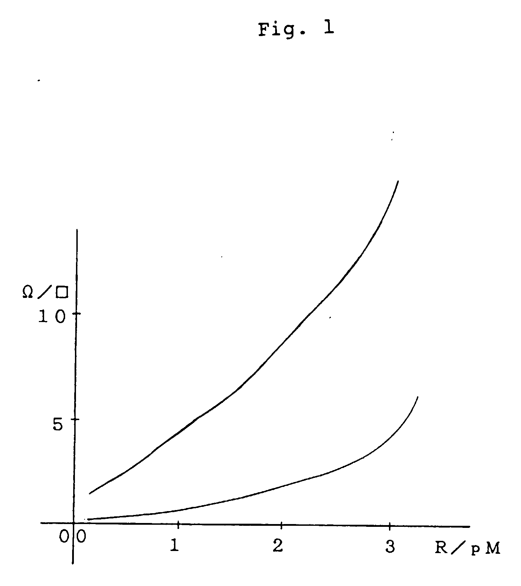

A hollow spherical Ag-plated conductive particle powder (PM) having a bulk density of 0.6 to 0.8 g/cm³ and obtained by plating hollow spherical particles (30 to 70 µm in size) of soda-lime borosilicate glass with silver to a deposit thickness of 0.1 to 0.2 µm by electroless plating was mixed with each of various synthetic resins (R) as the binders to prepare a coating. The coatings in which the R was compounded in amounts of 50, 100, 200 and 500 parts, respectively, per 100 parts of the PM were applied on 3 cm X 3 cm glass plates each having terminals attached to both ends thereof to produce heating units having a film thickness of 1 mm. The electric resistance (Ω/▭) was measured for each heating unit by an ohmmeter. The results fell between two upper and lower curves showing the relationship between R/PM and Ω/▭ in Fig. 1. The resistance differs according to the kind of the resins. For example, when the R/PM is 2, the heating units high in resistance exhibited a resistance of 10 Ω/▭ at ordinary temperature (one-pack type silicones and urethane resins) and the heating units low in resistance exhibited a resistance of 3Ω/▭ (unsaturated polyester resins). The resistance of the heating units containing epoxy resins, polyamide resins, polyflon resins, polyetheretherketone resins, polytitanocarbosilane resins, polyphenylene oxide resins and the like fell between the above resistance values. It was shown that the resistance varied depending the kind of the resin and the manufacturing condition and fell between two curves shown in Fig. 1.

As apparent from these results, it is seen that the resistance (Ω/▭) increases with an increase in amount of the resin binder. This shows that the heating units generating various temperatures can be obtained by changing the kind of the resin and the ration thereof.

### Example 2

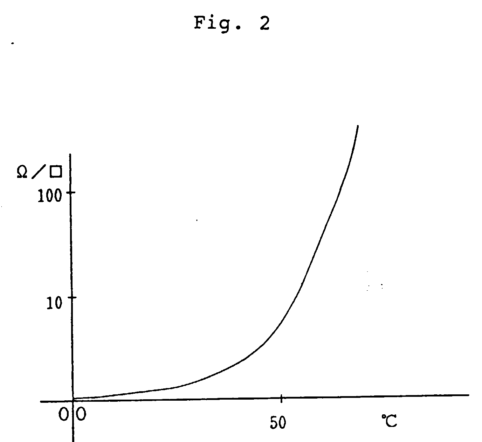

There were compounded 100 parts of the hollow spherical Ag-plated glass particles (having a size of 30 to 70 µm, a deposit thickness of 0.1 to 0.2 µm and a bulk density of 0.6 to 0.8 g/cm³) obtained in the same manner as with Example 1 and 130 parts of one-pack type epoxy resin containing dodecenylsuccinic anhydride (DDSA) as the curing agent to prepare a conductive coating. The resulting coating was applied on a 10 cm x 10 cm glass substrate to a thickness of 2 mm, followed by curing at 100°C. The relationship between the resistance (Ω/▭) and the temperature in the surface heater thus obtained is as shown in Fig. 2. When a voltage of 6 V was applied to this heater, a surface temperature of 55°C was obtained (the room temperature was 18°C).

Estimated from this experiment, the temperature of the coated film having a resistance of 10Ω/▭ and a size of 172 cm X 172 cm can be elevated to 55°C, when a voltage of 100 V was applied thereto.

### Example 3

A coated film containing 100 parts of the hollow spherical Ag-plated glass particles (having a size of 30 to 70 µm, a deposit thickness of 0.1 to 0.2 µm and a bulk density of 0.6 to 0.8 g/cm³) and 60 parts of a polyamide resin was formed on a 95% Al₂O₃ ceramic plate (20 cm X 20 cm in size and 2 cm in thickness). When a voltage of 24 V (144 W) was applied to copper terminals embedded in the coated film in parallel with each other at, both ends of the plate, a high temperature of 210°C was obtained (the room temperature was 20°C). When a voltage of 100 V was applied, the power was heightened from 144 W to 2,500 W, and the temperature of the coated film having a size of about 80 cm X 80 cm was elevated to 210°C. Thus, the surface heater having such a large heating area as previously not considered could be obtained. In contrast, with respect to prior-art surface heaters, an SiC, Ni-Cr heater only has the maximum size of 15 cm X 30 cm whose temperature is elevated to 200°C at 100 V.

## Claims

1. A conductive heating unit having a solid or solid surface coated with a film of 0.1 to 3.0 mm thickness on a surface and having terminals for applying a voltage from 0.5 to 200 V, wherein said film is obtained by applying a coating or paste to the surface of the solid or by impregnating the solid in a coating or paste, wherein the coating or paste comprises fine conductive particle powder(s) and a synthetic resin binder, wherein the fine conductive particle powder(s) comprise(s) fine hollow spherical particles of glass or a heat-resistant resin, said particles being plated with a metal in a thickness of 0.1 to 0.3 µm and said powder having a bulk density of 0.2 to below 0.9 g/cm³.

2. A conductive heating unit as defined in claim 1, wherein said fine hollow spherical particles have a size of 4 to 350 µm.

3. A conductive heating unit as defined in claim 1 or 2, wherein said synthetic resin binder is contained in a ratio of 25 to 360 parts by weight to 100 parts by weight of the fine conductive particle powder.

4. A conductive heating unit as defined in claim 1, 2 or 3, wherein said synthetic resin binder is at least one resin selected from the group consisting of a silicone resin, a urethane resin, an epoxy resin, a polyamide resin, a polyester resin, a polyimide resin, a polyolefin resin, a polyflon resin, a polyetheretherketone resin, a polyphenylene sulfide resin and a polytitanocarbosilane resin.

5. A process for producing the conductive heating unit as defined in claim 1, comprising applying a coating or paste to the surface of the solid or by impregnating the solid in a coating or paste resulting in 0.1 to 3.0 mm thickness, and then curing the coating or paste at a temperature of 70 to 350 °C.

6. Use of the conductive heating according to anyone of claims 1 to 5 for producing interior wall application, floorings, roofings, furnace inner surfaces, inner and outer surface pipe applications, carpets, blankets, warmers, antifreezers, signal covers and pots.

## Patentansprüche

1. Leitfähige Heizeinheit mit einem Feststoff oder einer Feststoff-Oberfläche, auf einer Oberfläche mit einem 0,1 bis 3,0 mm dicken Film beschichtet und mit Anschlüssen zum Anlegen einer Spannung von 0,5 bis 200 V, wobei der Film erhalten wird, indem eine Beschichtung oder Paste auf die Oberfläche des Feststoffs aufgetragen wird, oder indem der Feststoff in einer Beschichtung oder Paste getränkt wird, wobei die Beschichtung oder Paste (ein) Pulver aus feinen, leitfähigen Teilchen und ein synthetisches Harzbindemittel umfaßt, wobei das (die) Pulver aus leitfähigen Teilchen feine, hohle, kugelförmige Teilchen aus Glas oder einem wärmebeständigen Harz umfaßt (umfassen), wobei die Teilchen in einer Dicke von 0,1 bis 0,3 µm mit einem Metall beschichtet sind und das Pulver eine Schüttdichte von 0,2 bis weniger als 0,9 g/cm³ aufweist.

2. Leitfähige Heizeinheit nach Anspruch 1, wobei die feinen, hohlen, kugelförmigen Teilchen eine Größe von 4 bis 350 µm aufweisen.

3. Leitfähige Heizeinheit nach Anspruch 1 oder 2, wobei das synthetische Harzbindemittel mit einem Anteil von 25 bis 360 Gew.-Teilen auf 100 Gew.-Teile des Pulvers aus feinen, leitfähigen Teilchen vorhanden ist.

4. Leitfähige Heizeinheit nach Anspruch 1, 2 oder 3, wobei es sich bei dem synthetischen Harzbindemittel um wenigstens ein Harz handelt, das aus der aus einem Siliconharz, einem Urethanharz, einem Epoxyharz, einem Polyamidharz, einem Polyesterharz, einem Polyimidharz, einem Polyolefinharz, einem Polyflonharz, einem Polyetheretherketonharz, einem Polyphenylensulfidharz und einem Polytitanocarbosilanharz bestehenden Gruppe ausgewählt ist.

5. Verfahren zur Herstellung der in Anspruch 1 definierten, leitfähigen Heizeinheit, umfassend das Auftragen einer Beschichtung oder Paste auf die Oberfläche des Feststoffs oder das Tränken des Feststoffs in einer Beschichtung oder Paste, was zu einer Dicke von 0,1 bis 3,0 mm führt, und anschließend das Härten der Beschichtung oder Paste bei einer Temperatur von 70 bis 350 °C.

6. Verwendung der leitfähigen Heizung nach einem der Ansprüche 1 bis 5 zur Herstellung einer Innenwandanwendung, Fußböden, Bedachungen, inneren Oberflächen von Öfen, Anwendungen innerer und äußerer Rohroberflächen, Teppichen, Abdeckungen, Wärmern, Frostschutzvorrichtungen, Signalabdeckungen und Töpfen.

## Revendications

1. Moyen de chauffage conducteur ayant un solide ou une surface solide revêtus par un film de 0,1 à 3,0 mm d'épaisseur sur une surface et présentant des extrémités pour appliquer une tension de 0,5 à 200 V, dans lequel on obtient ledit film en appliquant un revêtement ou une pâte sur la surface du solide ou en imprégnant le solide d'un revêtement ou d'une pâte, dans lequel le revêtement ou la pâte comprend une ou des poudres de particules conductrices fines et un liant de type résine synthétique, dans lequel la ou les poudre(s) de particules conductrices fines comprennent des parti- cules sphériques creuses fines de verre ou une résine résistante à la chaleur, lesdites particules étant plaquées avec un métal suivant une épaisseur de 0,1 à 0,3 µm et ladite poudre ayant une densité apparente de 0,2 à 0,9 g/cm³.

2. Moyen de chauffage conducteur conforme à la revendication 1, dans lequel lesdites particules sphériques creuses fines ont une taille comprise entre 4 et 350 µm.

3. Moyen de chauffage conducteur conforme à la revendication 1 ou 2, dans lequel ledit liant de type résine synthétique est contenu en un rapport de 25 à 360 parties en poids pour 100 parties en poids de poudre de particules conductrice fine.

4. Moyen de chauffage conducteur conforme à la revendication 1, 2 ou 3, dans lequel ledit liant de type résine synthétique est au moins une résine choisie dans l'ensemble constitué par une résine silicone, une résine uréthanne, une résine époxy, une résine polyamide, une résine polyester, une résine polyimide, une résine polyoléfine, une résine polymère fluoré, une résine poly(éther éther cétone), une résine poly(sulfure de phénylène) et une résine poly(titanocarbosilane).

5. Procédé de production du moyen de chauffage conducteur conforme à la revendication 1, comprenant le fait d'appliquer un revêtement ou une pâte sur la surface du solide ou en imprégnant le solide d'un revêtement ou d'une pâte, ce qui conduit à une épaisseur de 0,1 à 3,0 mm, et puis le fait de faire durcir le revêtement ou la pâte à une température de 70 à 350° C.

6. Utilisation du moyen de chauffage conducteur conforme aux revendications 1 à 5, pour la production d'une application à des murs intérieurs, sols, toitures, surfaces internes de four, applications de canalisations de surfaces intérieures ou extérieures, tapis, couvertures, réchauffeurs, dispositifs anti-givre, couvercles de signaux et marmites.
